# EUROPEAN PATENT APPLICATION

(11) **EP 4 769 048 A1**
(43) Date of publication of application: **01.07.2026**
(21) Application number: 25184836.2
(22) Date of filing: 24.06.2025
(51) Int. Cl.: G05D 1/227, G05D 109/20, G08C 17/00, G08G 5/00

(54) **SYSTEM, APPARATUS, AND METHOD FOR REMOTE CONTROL OF AN AERIAL VEHICLE**

(30) Priority: 31.12.2024 KR 20240202722
(71) Applicant: Hyundai Motor Company, Seoul 06797 (KR); Kia Corporation, Seoul 06797 (KR)
(72) Inventor: LIM, Jun Young, 18280 Hwaseong-si, Gyeonggido (KR); KIM, Tae Ho, 18280 Hwaseong-si, Gyeonggido (KR); MOON, Gun Hee, 18280 Hwaseong-si, Gyeonggido (KR); RYU, Hyun, 18280 Hwaseong-si, Gyeonggido (KR)
(74) Representative: Viering, Jentschura & Partner mbB Patent- und Rechtsanwälte

(57) **Abstract**

A mobility device, typically a remotely piloted aircraft, includes a memory storing at least one instruction and at least one processor that executes the at least one instruction to perform operations. The operations comprise determining whether to perform a handover process of a control authority ownership of the mobility device to another remotely pilot station based on communication strength between a first remotely pilot station and the mobility device, transmitting, based on a determination to perform the handover process, a communication request signal to a plurality of remotely pilot stations, and performing, based on a control authority handover start command being received from the first remotely pilot station, the handover process with a second remotely pilot station.

## Description

### CROSS-REFERENCE TO RELATED APPLICATION

This application claims the benefit of priority to Korean Patent Application No. 10-2024-0202722, filed in the Korean Intellectual Property Office on December 31, 2024, the entire contents of which are incorporated herein by reference.

### TECHNICAL FIELD

The present disclosure relates to a system, an apparatus, and a method for controlling a mobility device.

### BACKGROUND

With advances in mobility technology, mobility devices are increasingly being deployed across a wide range of applications, including cargo transport, crop pest control, firefighting, law enforcement, cadastral surveying, port management, underwater drones, and more.

The term "mobility device" may collectively refer to an integrated system including an aerial vehicle that operates autonomously or semi-autonomously along a predefined flight path without an onboard pilot, as well as associated mission equipment, ground control systems, communication systems, support equipment, and operational personnel.

A ground control system (GCS), ground radio station (GRS), or unmanned aircraft (UA) may serve as a remote pilot station to control or monitor the mobility device along its flight route. Each remotely pilot station supports communication within a defined coverage area.

Due to the operational nature of such mobility systems, communication between the mobility device and the remote pilot station may fail if the device moves beyond the station's coverage area, experiences an airframe anomaly, or encounters a communication malfunction. Loss of connectivity with the remote pilot station may place the mobility device in a high-risk or hazardous situation.

### SUMMARY

The present disclosure is directed to a system, an apparatus, and a method for controlling a mobility device to allow a remotely pilot station to assume control authority in a corresponding area based on the mobility device moving a long distance to perform a mission, thereby enhancing communication and control stability.

According to an aspect of the present disclosure, a system for controlling a mobility device can include a first remotely pilot station configured to hold an initial control authority of the mobility device, a second remotely pilot station, and the mobility device. The mobility device can be configured to determine whether to perform a handover process of a control authority ownership of the mobility device to a remotely pilot station different from the first remotely pilot station, based on communication strength between the first remotely pilot station and the mobility device, and, based on a determination to perform the handover process, transmit a communication request signal to a plurality of remotely pilot stations, where the second remotely pilot station can be configured to, among the plurality of remotely pilot stations, (i) receive the communication request signal and (ii) transmit a control authority handover request to the first remotely pilot station, and the first remotely pilot station can be configured to, based on the control authority handover request being received, transmit a control authority handover start command to the mobility device to enable the mobility device to perform the handover process with the second remotely pilot station.

In some implementations, the mobility device can be configured to perform the handover process, while hovering or loitering above a certain area or continuing a task assigned from the first remotely pilot station. In some implementations, the mobility device can be configured to, based on the handover process being performed, stop communication between the mobility device and the first remotely pilot station and initiate communication between the mobility device and the second remotely pilot station.

In some examples, the mobility device can be configured to maintain performance of a current task, until a next command is received from the second remotely pilot station. In some examples, the mobility device can be configured to, based on communication disconnection from the first remotely pilot station being detected in a state in which the mobility device is not communicatively connected to the second remotely pilot station, move to a pre-specified point to hover or loiter until connected with the first remotely pilot station, and, based on communicatively being reconnected with the first remotely pilot station, re-perform a task that was performed immediately before the communication disconnection.

In some implementations, the mobility device can be configured to, based on the mobility device being communicatively connected with the first remotely pilot station, determine whether a distance between the mobility device and the first remotely pilot station is greater than a predetermined link connection safety distance, and, based on the distance between the mobility device and the first remotely pilot station being greater than the predetermined link connection safety distance, transmit an alarm signal to the first remotely pilot station. In some implementations, the mobility device can be configured to transmit, to the first remotely pilot station, a signal for initiating the handover process, and the first remotely pilot station can be configured to determine whether the handover process is performed without errors based on the signal for initiating the handover process, and, based on a determination that the handover process is performed with an error, transmit a control authority handover restart command to the mobility device.

According to an aspect of the present disclosure, a mobility device can include a memory storing at least one instruction, and at least one processor configured to execute the at least one instruction to perform operations. The operations can include determining whether to perform a handover process of a control authority ownership of the mobility device to another remotely pilot station based on communication strength between a first remotely pilot station and the mobility device, based on a determination to perform the handover process, transmitting a communication request signal to a plurality of remotely pilot stations, and, based on a control authority handover start command being received from the first remotely pilot station, perform the handover process with a second remotely pilot station.

In some implementations, the second remotely pilot station can be a device, among the plurality of remotely pilot stations, configured to transmit a control authority handover request to the first remotely pilot station in response to the communication request signal, and the at least one processor can be configured to perform the handover process, based on the control authority handover start command transmitted from the first remotely pilot station that has received the control authority handover request.

In some implementations, the at least one processor can be configured to, based on communication disconnection from the first remotely pilot station being detected in a state in which the mobility device is not communicatively connected to the second remotely pilot station, control the mobility device to move to a pre-specified point to hover or loiter, until the mobility device is connected with the first remotely pilot station, and, based on communicatively being reconnected with the first remotely pilot station, re-perform a task that was performed immediately before the communication disconnection.

In some examples, the at least one processor can be configured to, based on the mobility device being communicatively connected with the first remotely pilot station, determine whether a distance from the first remotely pilot station is greater than a predetermined link connection safety distance, and, based on the distance between the mobility device and the first remotely pilot station being greater than the predetermined link connection safety distance, transmit an alarm signal to the first remotely pilot station.

According to an aspect of the present disclosure, a method for controlling a mobility device can include determining, by the mobility device, whether to perform a handover process of a control authority ownership of the mobility device to another remotely pilot station based on communication strength between a first remotely pilot station and the mobility device, based on a determination to perform the handover process, transmitting, by the mobility device, a communication request signal to a plurality of remotely pilot stations, receiving, by a second remotely pilot station among the plurality of remotely pilot stations, the communication request signal, transmitting, by the second remotely pilot station, a control authority handover request to the first remotely pilot station, transmitting, by the first remotely pilot station, a control authority handover start command to the mobility device, and performing, by the mobility device, the handover process with the second remotely pilot station.

In some implementations, performing the handover process can include performing the handover process, while hovering or loitering above a certain area or continuing a task assigned from the first remotely pilot station. In some implementations, performing the handover process can include stopping communication between the mobility device and the first remotely pilot station, and initiating communication between the mobility device and the second remotely pilot station.

In some examples, the method can further include transmitting, by the second remotely pilot station, a control authority handover completion signal to the mobility device. In some examples, the method can further include detecting, by the mobility device, a communication disconnection from the first remotely pilot station in a state in which the mobility device is not communicatively connected with the second remotely pilot station, moving, by the mobility device, to a pre-specified point to hover or loiter, until the mobility device is connected with the first remotely pilot station, and re-performing, by the mobility device, a task that was performed immediately before the communication disconnection, based on the mobility device being communicatively reconnected with the first remotely pilot station.

In some implementations, the method can further include determining, by the mobility device, whether a distance between the mobility device and the first remotely pilot station is greater than a predetermined link connection safety distance in a state in which the mobility device is communicatively connected with the first remotely pilot station, and,
based on the distance between the mobility device and the first remotely pilot station being greater than the predetermined link connection safety distance, transmitting, by the mobility device, an alarm signal to the first remotely pilot station. In some implementations, the method can further include, after the first remotely pilot station transmits the control authority handover start command to the mobility device, transmitting, by the mobility device, a signal for initiating the handover process to the first remotely pilot station, determining, by the first remotely pilot station, whether the handover process is performed without errors based on the signal for initiating the handover process, and, based on a determination that the handover process is performed with an error, transmitting, by the first remotely pilot station, a control authority handover restart command to the mobility device.

In some examples, the method can further include determining, by the first remotely pilot station, based on a number of times the control authority handover restart command is transmitted is greater than a predetermined number of times, that the handover process is infeasible. In some examples, the method can further include returning, by the mobility device, to a pre-specified point to hover or loiter, based on a communication disconnection between the first remotely pilot station and the mobility device is detected, after determining that the handover process is infeasible.

### BRIEF DESCRIPTION OF THE DRAWINGS

FIG. 1 is a diagram illustrating an example of a system for controlling a mobility device.
FIG. 2 is a block diagram illustrating an example of a mobility device.
FIG. 3 is a flowchart for describing an example of a method for controlling a mobility device.
FIG. 4 is a flowchart for describing an example of a method for controlling a mobility device.
FIG. 5 is a flowchart for describing an example of a method for controlling a mobility device.

### DETAILED DESCRIPTION

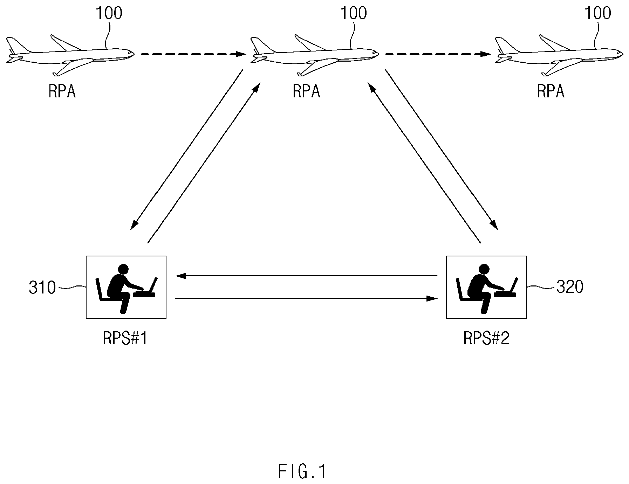

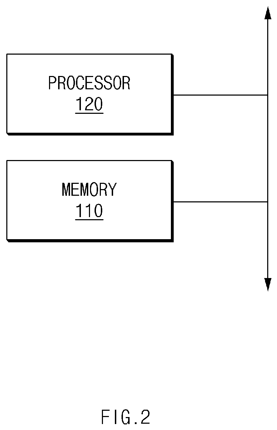

FIG. 1 is a diagram illustrating an example of a system for controlling a mobility device. FIG. 2 is a block diagram illustrating an example of a mobility device.

Referring to FIG. 1, the system for controlling the mobility device can include a mobility device 100, a first remotely pilot station (RPS) 310 (RPS#1), and a second RPS 320 (RPS#2). For convenience of description, the present disclosure exemplifies a single mobility device and two RPSs, but the present disclosure is not limited thereto. The implementations of the present disclosure can be applied to a plurality of mobility devices and a plurality of RPSs.

FIG. 1 illustrates a remotely-pilot aircraft (RPA) as an example of the mobility device 100, but the present disclosure is not limited thereto. The mobility device 100 can be provided as a drone, an unmanned helicopter, an unmanned surveillance vehicle, a manned aerial vehicle, an unmanned aerial vehicle, a ground vehicle, a rail vehicle, a vessel, or the like. The mobility device 100 can adopt all mobilities, an operation associated with navigation of which is controlled by the RPSs 310 and 320 located on the ground. Implementations disclosed in the present disclosure can be applied to the above-mentioned mobility device.

As depicted in FIG. 2, the mobility device 100 can include a memory 110 for storing at least one instruction and at least one processor 120 for executing the at least one instruction.

The mobility device 100 can be navigated under control of the RPS 300 (310 and 320), which holds control authority over the mobility device 100. For example, all operations associated with the navigation can be controlled by the RPS 300 that is in a communicable range between the RPS 300 and the mobility device 100.

The at least one processor 120 can manage control authority, such as piloting of the mobility device 100, which can be integrally loaded into the mobility device 100 to be used to manage control authority of the RPS 300 for the mobility device 100.

The RPS 300 can be at least one of a ground control system (GCS), a ground radio station (GRS), or an unmanned aircraft (UA). A device capable of controlling the mobility device 100 via wireless communication can refer to the RPS 300.

The RPS 300 and the mobility device 100 can be connected with each other via communication, where the communication can refer to a command & control link (C2 link) . The mobility device 100 can perform command and control via the C2 link.

In some implementations, communication lines (or data links or frequency bands) of the C2 link can include multiples rather than one. For example, the communication lines of the C2 link can be provided as ultra high frequency (UHF), C-band, 4th generation (4G), 5th generation (5G), or the like.

The mobility device 100 can transmit a signal for starting a control authority handover process of the mobility device 100 and a signal for ending the handover process using the same communication frequency band as a data link for receiving command and control signals from the RPS 300.

In some implementations, an RPS which holds control authority for the mobility device 100 before handing over ownership of the control authority for the mobility device 100 can refer to the first RPS 310 and an RPS which takes over the control authority held by the first RPS 310 can refer to the second RPS 320.

The mobility device 100 can determine whether to perform a handover process of the control authority ownership to another RPS based on communication strength with the first RPS 310 or a separation distance from the first RPS 310.

In some implementations, if the communication strength with the first RPS 310 becomes less than a predetermined threshold, the mobility device 100 can determine to perform a handover process of the ownership of the control authority for the mobility device 100 to the other RPS.

In some implementations, if the distance spaced apart from the first RPS 310 becomes greater than or equal to a predetermined threshold distance, the mobility device 100 can determine to perform a handover process of the ownership of the control authority for the mobility device 100 to the other RPS.

Based on a determination to perform a handover process of the ownership of the control authority for the mobility device 100, the mobility device 100 can broadcast a communication request signal to surrounding RPSs.

The communication request signal can include information regarding the first RPS 310 that currently holds the control authority for the mobility device 100. In some implementations, the communication request signal can be a signal for checking whether the receiving RPS can communicate with the mobility device 100.

If the second RPS 320 among the surrounding RPSs that have received the communication request signal can communicate with the mobility device 100, the second RPS 320 can transmit a control authority handover request to the first RPS 310 based on the communication request signal.

Based on a determination to allow the control authority handover process, the first RPS 310, which has received the control authority handover request from the second RPS 320, can transmit a control authority handover start command to the mobility device 100.

If the mobility device 100 has received the control authority handover start command, the mobility device 100 can initiate the control authority handover process, while either circling navigation or continuing the mission it was performing immediately prior.

In this regard, the mobility device 100 can transmit, to the first RPS 310, a signal for initiating performance of the control authority handover process, and the first RPS 310 can determine whether the control authority handover process is performed without errors, based on the received signal for initiating the performance of the control authority handover process. In some implementations, based on a determination that an error has occurred during the control authority handover process, the first RPS 310 can transmit a control authority handover process restart command to the mobility device 100.

In some implementations, based on a determination that the control authority handover process is performed without errors, the first RPS 310 can transmit a control authority handover possible signal to the second RPS 320 and end the communication with the mobility device 100.

Thereafter, if the control authority handover process is completed, the second RPS 320 can transmit a signal indicating that the control authority handover process is completed to the mobility device 100 and control navigation of the mobility device 100 based on the handed-over control authority.

In some implementations, the mobility device 100 can end the performance of the control authority handover process and maintain the performance of the current mission until a command is received from the second RPS 320.

For example, if the number of times the first RPS 310 repeatedly transmits the control authority handover process restart command to the mobility device 100 is greater than a predetermined number of times, the first RPS 310 can determine that it is impossible to handover the control authority for the mobility device 100.

If a communication disconnection from the first RPS 310 being detected, after it is determined that it is impossible to perform the handover process of the control authority, the mobility device 100 can return to a pre-specified point and hover or loiter. For example, the pre-specified point can be, but is not limited to, coordinates at which the mobility device 100 takes off to start navigation.

In some implementations, if the mobility device 100 and the first RPS 310 are communicatively connected with each other, after it is determined that it is impossible to perform the handover process of the control authority, the mobility device 100 can transmit, to the first RPS 310, a signal indicating that it is impossible to perform the handover process of control authority and wait for a command transmitted from the first RPS 310, while hovering or loitering above the current location.

In some implementations, if the mobility device 100 broadcasts the communication request signal to surrounding RPSs, the surrounding RPSs may fail to receive the communication request signal or communication between the second RPS 320 and the mobility device 100 may fail to be connected. In this scenario, based on a communication disconnection from the first RPS 310 being detected, the mobility device 100 can move to a pre-specified point to hover or loiter, until communicatively connected with the first RPS 310, and re-perform the mission it was performing immediately prior to the communication disconnection, if communicatively connected with the first RPS 310 again.

In some implementations, in the state in which the surrounding RPSs do not receive the communication request signal or in the state in which the communication between the second RPS 320 and the mobility device 100 is not connected, if the communication between the mobility device 100 and the first RPS 310 is connected, the mobility device 100 can determine whether the distance from the first RPS 310 is greater than a predetermined link connection safety distance.

Based on a determination that the distance between the first RPS 310 and the mobility device 100 is greater than the predetermined link connection safety distance, the mobility device 100 can transmit an alarm signal to the first RPS 310.

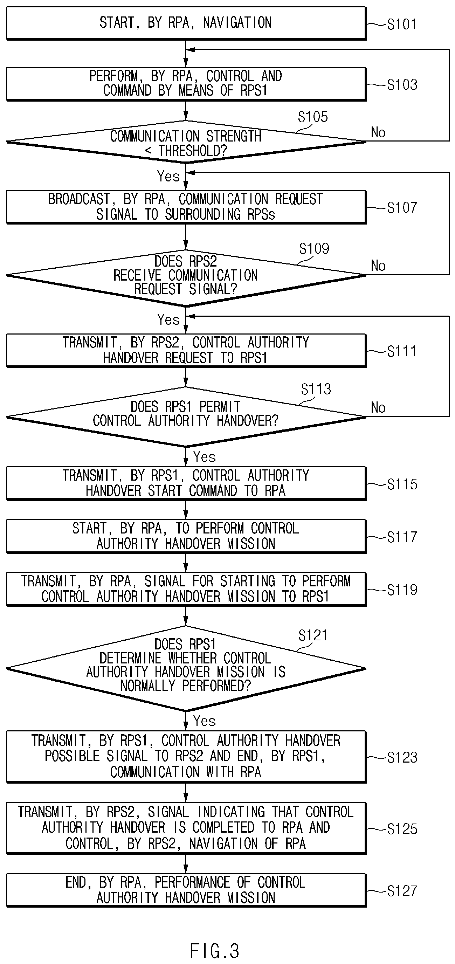

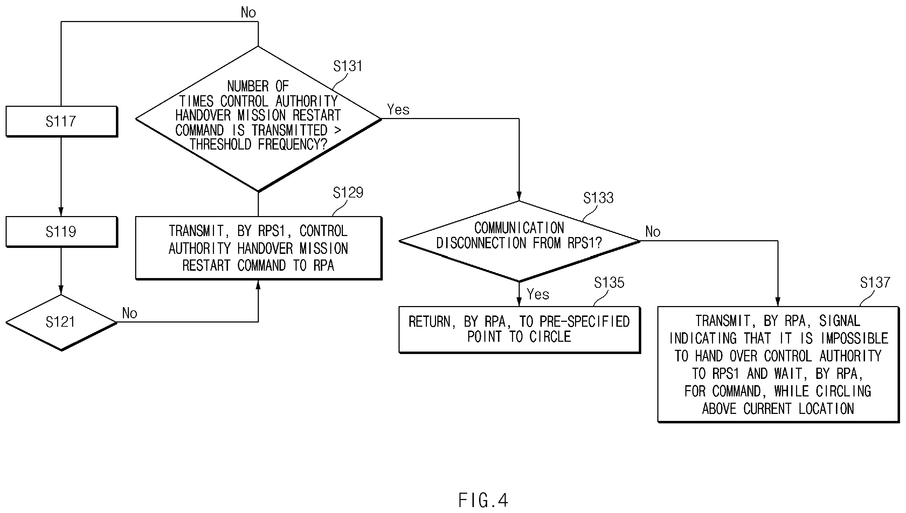

FIGS. 3 and 4 are flowcharts for describing an example of a method for controlling a mobility device. A description duplicated with the configuration and function described above with reference to FIGS. 1 and 2 may be partially omitted.

In S101, a mobility device RPA can start navigation. In S103, the mobility device RPA can perform control and command processes through a first RPS RPS1.

In S105, the mobility device RPA can compare communication connection strength with the first RPS RPS1. For example, the mobility device RPA can compare (i) the communication connection strength with the first RPS RPS1 against (ii) a predetermined threshold, while performing the control and command processes.

In some implementations, if the communication strength with the first RPS RPS1 is less than the predetermined threshold, the mobility device RPA can determine to perform the handover ownership process of control authority for the mobility device RPA to another RPS.

In some implementations, the mobility device RPA can determine whether to perform a handover process of the ownership of the control authority for the mobility device RPA to the other RPS based on a separation distance from the first RPS RPS1.

In some implementations, if a distance between the first RPS RPS1 and the mobility device RPA is greater than or equal to a predetermined threshold distance, the mobility device RPA can determine to perform the handover process of the ownership of the control authority for the mobility device RPA to the other RPS.

Based on a determination to perform the handover process of the ownership of the control authority for the mobility device RPA, in S107, the mobility device RPA can broadcast a communication request signal to surrounding RPSs.

The communication request signal can include information regarding the first RPS RPS1 currently holding the control authority for the mobility device RPA and can be a signal for checking whether the receiving RPS can communicate with the mobility device RPA.

If the second RPS RPS2 among the surrounding RPSs that have received the communication request signal can communicate with the mobility device RPA, in S111, the second RPS RPS2 can transmit a control authority handover request to the first RPS RPS1 based on the communication request signal.

Herein, if the surrounding RPSs are plural in number, the second RPS RPS2 can be a device which is in the closest distance from the mobility device RPA among the surrounding RPSs or can be selected as one with the greatest communication strength with the mobility device RPA.

Based on a determination to allow the performance of the control authority handover process in S113, in S115, the first RPS RPS1, which has received the control authority handover request from the second RPS RPS2, can transmit a control authority handover start command to the mobility device RPA.

If the control authority handover start command is received at the mobility device RPA, in S117, the mobility device RPA can initiate performing a control authority handover process, while navigating in a circular patter or continuing the mission it was performing immediately prior.

Thus, in S119, the mobility device RPA can transmit a signal for initiating the performance of the control authority handover process to the first RPS RPS1. In S121, the first RPS RPS1 can determine whether the control authority handover process is performed without errors, based on the received signal for initiating the performance of the control authority handover process.

The signal for initiating the performance of the control authority handover process can include information, such as information regarding the second RPS PRS2, a separation distance between the second RPS RPS2 and the mobility device RPA, communication strength between the second RPS RPS2 and the mobility device RPA, or a time for initiating performance of the control authority handover process.

Based on a determination that the control authority handover process is performed without errors, in S123, the first RPS RPS1 can transmit a control authority handover possible signal to the second RPS RPS2 and end the communication with the mobility device RPA.

Thereafter, if the control authority handover process is completed, in S125, the second RPS RPS2 can transmit a signal indicating that the control authority handover process is completed to the mobility device RPA and can control navigation of the mobility device RPA based on the handed-over control authority.

Next, in S127, the mobility device RPA can end the performance of the control authority handover process and maintain the performance of the current mission until a command is received from the second RPS RPS2.

In some implementations, in S121 (refer to FIG. 4), based on a determination that an error has occurred during the control authority handover process, in S129, the first RPS RPS1 can transmit a control authority handover process restart command to the mobility device RPA.

Whenever it is determined that the error has occurred during the control authority handover process, the first RPS RPS1 can transmit the control authority handover process restart command to the mobility device RPA.

If the number of times the first RPS RPS1 repeatedly transmits the control authority handover mission restart command to the mobility device RPA is greater than a predetermined threshold frequency in S131, the first RPS RPS1 can determine that the handover process cannot be performed for the mobility device RPA.

If a communication disconnection from the first RPS RPS1 is detected in S133, after it is determined that the handover process cannot be performed, in S135, the mobility device RPA can return to a pre-specified point and hover or loiter.

In some implementations, if the mobility device RPA and the first RPS RPS1 can be communicatively connected with each other in S133, after it is determined that the handover process cannot be performed, in S137, the mobility device RPA can transmit a signal indicating that the handover process cannot be performed to the first RPS RPS1 and wait for a command transmitted from the first RPS RPS1, while hovering or loitering above the current location.

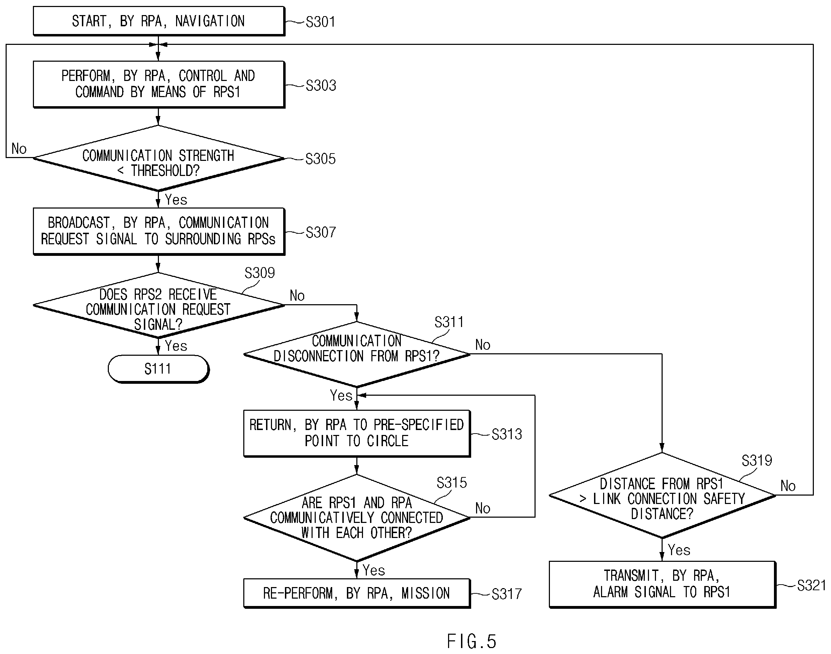

FIG. 5 is a flowchart for describing an example of a method for controlling a mobility device. The difference from the implementations shown in FIG. 3 is flow corresponding to the case of "No" in S109.

Referring to FIG. 5, in S301, a mobility device RPA can initiate navigation. In S303, the mobility device RPA can perform a control and command process through a first RPS RPS1.

In S305, the mobility device RPA can compare communication connection strength with the first RPS RPS1, that is, communication strength with a predetermined threshold, while performing the control and command process.

In some implementations, if the communication strength with the first RPS RPS1 is less than the predetermined threshold, the mobility device RPA can determine to perform a handover process of ownership of control authority for the mobility device RPA to another RPS.

In some implementations, the mobility device RPA can determine whether to perform the handover process of the ownership of the control authority for the mobility device RPA to the other RPS based on a separation distance from the first RPS RPS1.

For example, if the distance between the first RPS RPS1 and the mobility device RPA is greater than or equal to a predetermined threshold distance, the mobility device RPA can determine to perform a handover process of the ownership of the control authority for the mobility device RPA to the other RPS.

Based on a determination to perform the handover process of the ownership of the control authority for the mobility device RPA, in S307, the mobility device RPA can broadcast a communication request signal to surrounding RPSs.

In some implementations, if the mobility device RPA broadcasts the communication request signal to the surrounding RPSs, in S309, the surrounding RPSs may fail to receive the communication request signal or communication between the second RPS RPS2 and the mobility device RPA may fail to be connected.

In this scenario, in S311, the mobility device RPA can detect whether there is a communication disconnection from the first RPS RPS1. If the communication disconnection is detected, in S313, the mobility device RPA can move to a pre-specified point and hover or loiter.

Next, if the first RPS RPS1 and the mobility device RPA are communicatively connected with each other again in S315, in S317, the mobility device RPA can re-perform the mission which is being performed immediately before the communication disconnection.

In some implementations, in the state in which the surrounding RPSs do not receive the communication request signal in S309 or in which the communication between the second RPS RPS2 and the mobility device RPA is disconnected, if it is detected that the communication between the mobility device RPA and the first RPS RPS1 is connected in S311, in S319, the mobility device RPA can determine whether the distance from the first RPS RPS1 is greater than a predetermined link connection safety distance.

Based on a determination that the distance between the first RPS RPS1 and the mobility device RPA is greater than the predetermined link connection safety distance in S319, in S321, the mobility device RPA can transmit an alarm signal to the first RPS RPS1.

In some implementations, based on a determination that the distance between the first RPS RPS1 and the mobility device RPA is less than or equal to the predetermined link connection safety distance in S319, the mobility device RPA can return to S303.

According to the present disclosure, if the mobility device moves a long distance to perform a mission, the RPS may take over control authority and may perform the control authority in a corresponding area, thus maintaining a physical communication distance in an appropriate level to ensure communication stability of the mobility device.

Furthermore, according to the present disclosure, even if RPSs and the mobility devices are plural in number, they may ensure a procedure for airframe flight, thus increasing stability of the airframe flight.

According to the present disclosure, the remotely pilot station may take over control authority and may perform the control authority in a corresponding area, if the mobility device moves a long distance to perform a mission, thus maintaining a physical communication distance in an appropriate level to ensure communication stability of the mobility device.

Furthermore, according to the present disclosure, remotely pilot stations and mobility devices may ensure a procedure for airframe flight to increase stability of the airframe flight, even if the remotely pilot stations and the mobility devices are plural in number.

## Claims

1. A system for controlling a mobility device, the system comprising:
a first remotely pilot station configured to hold an initial control authority of the mobility device;
a second remotely pilot station; and
the mobility device configured to:
determine whether to perform a handover process of a control authority ownership of the mobility device to a remotely pilot station different from the first remotely pilot station, based on communication strength between the first remotely pilot station and the mobility device, and
based on a determination to perform the handover process, transmit a communication request signal to a plurality of remotely pilot stations,
wherein the second remotely pilot station is configured to, among the plurality of remotely pilot stations, (i) receive the communication request signal and (ii) transmit a control authority handover request to the first remotely pilot station, and
wherein the first remotely pilot station is configured to, based on the control authority handover request being received, transmit a control authority handover start command to the mobility device to enable the mobility device to perform the handover process with the second remotely pilot station.

2. The system of claim 1, wherein the mobility device is configured to:
perform the handover process, while hovering or loitering above a certain area or continuing a task assigned from the first remotely pilot station.

3. The system of claim 1 or 2, wherein the mobility device is configured to:
based on the handover process being performed, stop communication between the mobility device and the first remotely pilot station and initiate communication between the mobility device and the second remotely pilot station.

4. The system of anyone of claims 1-3, wherein the mobility device is configured to:
based on communication disconnection from the first remotely pilot station being detected in a state in which the mobility device is not communicatively connected to the second remotely pilot station, move to a pre-specified point to hover or loiter until connected with the first remotely pilot station, and
based on communicatively being reconnected with the first remotely pilot station, re-perform a task that was performed immediately before the communication disconnection.

5. The system of anyone of claims 1-4, wherein the mobility device is configured to:
based on the mobility device being communicatively connected with the first remotely pilot station, determine whether a distance between the mobility device and the first remotely pilot station is greater than a predetermined link connection safety distance, and
based on the distance between the mobility device and the first remotely pilot station being greater than the predetermined link connection safety distance, transmit an alarm signal to the first remotely pilot station.

6. The system of anyone of claims 1-5, wherein the mobility device is configured to:
transmit, to the first remotely pilot station, a signal for initiating the handover process, and
wherein the first remotely pilot station is configured to:
determine whether the handover process is performed without errors based on the signal for initiating the handover process, and
based on a determination that the handover process is performed with an error, transmit a control authority handover restart command to the mobility device.

7. A mobility device, comprising:
a memory storing at least one instruction; and
at least one processor configured to execute the at least one instruction to perform operations comprising:
determining whether to perform a handover process of a control authority ownership of the mobility device to another remotely pilot station based on communication strength between a first remotely pilot station and the mobility device;
based on a determination to perform the handover process, transmitting a communication request signal to a plurality of remotely pilot stations; and
based on a control authority handover start command being received from the first remotely pilot station, perform the handover process with a second remotely pilot station.

8. A method for controlling a mobility device, the method comprising:
determining, by the mobility device, whether to perform a handover process of a control authority ownership of the mobility device to another remotely pilot station based on communication strength between a first remotely pilot station and the mobility device;
based on a determination to perform the handover process, transmitting, by the mobility device, a communication request signal to a plurality of remotely pilot stations;
receiving, by a second remotely pilot station among the plurality of remotely pilot stations, the communication request signal;
transmitting, by the second remotely pilot station, a control authority handover request to the first remotely pilot station;
transmitting, by the first remotely pilot station, a control authority handover start command to the mobility device; and
performing, by the mobility device, the handover process with the second remotely pilot station.

9. The method of claim 8, wherein performing the handover process comprises:
performing the handover process, while hovering or loitering above a certain area or continuing a task assigned from the first remotely pilot station.

10. The method of claim 8 or 9, wherein performing the handover process comprises:
stopping communication between the mobility device and the first remotely pilot station; and
initiating communication between the mobility device and the second remotely pilot station.

11. The method of anyone of claims 8-10, further comprising:
transmitting, by the second remotely pilot station, a control authority handover completion signal to the mobility device.

12. The method of anyone of claims 8-11, further comprising:
detecting, by the mobility device, a communication disconnection from the first remotely pilot station in a state in which the mobility device is not communicatively connected with the second remotely pilot station;
moving, by the mobility device, to a pre-specified point to hover or loiter, until the mobility device is connected with the first remotely pilot station; and
re-performing, by the mobility device, a task that was performed immediately before the communication disconnection, based on the mobility device being communicatively reconnected with the first remotely pilot station.

13. The method of anyone of claims 8-12, further comprising:
determining, by the mobility device, whether a distance between the mobility device and the first remotely pilot station is greater than a predetermined link connection safety distance in a state in which the mobility device is communicatively connected with the first remotely pilot station; and
based on the distance between the mobility device and the first remotely pilot station being greater than the predetermined link connection safety distance, transmitting, by the mobility device, an alarm signal to the first remotely pilot station.

14. The method of anyone of claims 8-13, further comprising:
after the first remotely pilot station transmits the control authority handover start command to the mobility device:
transmitting, by the mobility device, a signal for initiating the handover process to the first remotely pilot station;
determining, by the first remotely pilot station, whether the handover process is performed without errors based on the signal for initiating the handover process; and
based on a determination that the handover process is performed with an error, transmitting, by the first remotely pilot station, a control authority handover restart command to the mobility device.

15. The method of claim 14, further comprising:
determining, by the first remotely pilot station, based on a number of times the control authority handover restart command is transmitted is greater than a predetermined number of times, that the handover process is infeasible.

## Amended claims

### Amended claims in accordance with Rule 137(2) EPC.

1. A system for controlling a mobility device (100), the system comprising:
a first remotely pilot station (310) configured to hold an initial control authority of the mobility device (100);
a second remotely pilot station (320); and
the mobility device (100) configured to:
determine whether to perform a handover process of a control authority ownership of the mobility device (100) to a remotely pilot station (300) different from the first remotely pilot station (310), based on communication strength between the first remotely pilot station (310) and the mobility device (100), and
based on a determination to perform the handover process, transmit a communication request signal to a plurality of remotely pilot stations (300),
wherein the second remotely pilot station (320) is configured to, among the plurality of remotely pilot stations (300), (i) receive the communication request signal and (ii) transmit a control authority handover request to the first remotely pilot station (310), and
wherein the first remotely pilot station (310) is configured to, based on the control authority handover request being received, transmit a control authority handover start command to the mobility device (100) to enable the mobility device (100) to perform the handover process with the second remotely pilot station (320),
wherein the mobility device (100) is configured to:
transmit, to the first remotely pilot station (310), a signal for initiating the handover process, and
wherein the first remotely pilot station (310) is configured to:
determine whether the handover process is performed without errors based on the signal for initiating the handover process, and
based on a determination that the handover process is performed with an error, transmit a control authority handover restart command to the mobility device (100).

2. The system of claim 1, wherein the mobility device (100) is configured to:
perform the handover process, while hovering or loitering above a certain area or continuing a task assigned from the first remotely pilot station (310).

3. The system of claim 1 or 2, wherein the mobility device (100) is configured to:
based on the handover process being performed, stop communication between the mobility device (100) and the first remotely pilot station (310) and initiate communication between the mobility device (100) and the second remotely pilot station (320) .

4. The system of anyone of claims 1-3, wherein the mobility device (100) is configured to:
based on communication disconnection from the first remotely pilot station (310) being detected in a state in which the mobility device (100) is not communicatively connected to the second remotely pilot station (320), move to a pre-specified point to hover or loiter until connected with the first remotely pilot station (310), and
based on communicatively being reconnected with the first remotely pilot station (310), re-perform a task that was performed immediately before the communication disconnection.

5. The system of anyone of claims 1-4, wherein the mobility device (100) is configured to:
based on the mobility device (100) being communicatively connected with the first remotely pilot station (310), determine whether a distance between the mobility device (100) and the first remotely pilot station (310) is greater than a predetermined link connection safety distance, and
based on the distance between the mobility device (100) and the first remotely pilot station (310) being greater than the predetermined link connection safety distance, transmit an alarm signal to the first remotely pilot station (310).

6. A method for controlling a mobility device (100), the method comprising:
determining, by the mobility device (100), whether to perform a handover process of a control authority ownership of the mobility device (100) to another remotely pilot station (300) based on communication strength between a first remotely pilot station (310) and the mobility device (100);
based on a determination to perform the handover process, transmitting, by the mobility device (100), a communication request signal to a plurality of remotely pilot stations (300);
receiving, by a second remotely pilot station (320) among the plurality of remotely pilot stations (300), the communication request signal;
transmitting, by the second remotely pilot station (320), a control authority handover request to the first remotely pilot station (310);
transmitting, by the first remotely pilot station (310), a control authority handover start command to the mobility device (100); and
performing, by the mobility device (100), the handover process with the second remotely pilot station (320), the method further comprising:
after the first remotely pilot station (310) transmits the control authority handover start command to the mobility device (100):
transmitting, by the mobility device (100), a signal for initiating the handover process to the first remotely pilot station (310);
determining, by the first remotely pilot station (310), whether the handover process is performed without errors based on the signal for initiating the handover process; and
based on a determination that the handover process is performed with an error, transmitting, by the first remotely pilot station (310), a control authority handover restart command to the mobility device (100).

7. The method of claim 6, wherein performing the handover process comprises:
performing the handover process, while hovering or loitering above a certain area or continuing a task assigned from the first remotely pilot station (310).

8. The method of claim 6 or 7, wherein performing the handover process comprises:
stopping communication between the mobility device (100) and the first remotely pilot station (310); and
initiating communication between the mobility device (100) and the second remotely pilot station (320).

9. The method of anyone of claims 6-8, further comprising:
transmitting, by the second remotely pilot station (320), a control authority handover completion signal to the mobility device (100).

10. The method of anyone of claims 6-9, further comprising:
detecting, by the mobility device (100), a communication disconnection from the first remotely pilot station (310) in a state in which the mobility device (100) is not communicatively connected with the second remotely pilot station (320);
moving, by the mobility device (100), to a pre-specified point to hover or loiter, until the mobility device (100) is connected with the first remotely pilot station (310); and
re-performing, by the mobility device (100), a task that was performed immediately before the communication disconnection, based on the mobility device (100) being communicatively reconnected with the first remotely pilot station (310).

11. The method of anyone of claims 6-10, further comprising:
determining, by the mobility device (100), whether a distance between the mobility device (100) and the first remotely pilot station (310) is greater than a predetermined link connection safety distance in a state in which the mobility device (100) is communicatively connected with the first remotely pilot station (310); and
based on the distance between the mobility device (100) and the first remotely pilot station (310) being greater than the predetermined link connection safety distance, transmitting, by the mobility device (100), an alarm signal to the first remotely pilot station (310).

12. The method of claim 6, further comprising:
determining, by the first remotely pilot station (310), based on a number of times the control authority handover restart command is transmitted is greater than a predetermined number of times, that the handover process is infeasible.
